# EUROPEAN PATENT SPECIFICATION

(11) **EP 2 358 759 B1**
(45) Date of publication and mention of the grant of the patent: **10.01.2018**
(21) Application number: 09795511.6
(22) Date of filing: 23.11.2009
(51) Int. Cl.: C08B 37/00, C08H 8/00, D21C 3/00

(54) **PROCESSING OF BIOMASS**
VERARBEITUNG VON BIOMASSE
TRANSFORMATION DE BIOMASSE

(30) Priority: 24.11.2008 GB 0821419
(43) Date of publication of application: 24.08.2011
(73) Proprietor: Bio-Sep Limited, High Wycombe, Buckinghamshire HP10 0NH (GB)
(72) Inventor: BROOKS, Stephen, Hampshire SO42 7UQ (GB)
(74) Representative: Gilholm, Stephen Philip
(86) International application number: PCT/GB2009/002731
(87) International publication number: WO 2010/058185

(56) References cited:
- WO-A1-2007/095787
- WO-A2-02/04084
- FR-A1- 2 747 130
- US-A- 5 730 837
- US-A1- 2005 136 520

## Description

### FIELD OF THE INVENTION

The present invention relates to a novel process for the treatment of biomass materials. In particular the process provides a method of separating biomass material into its major constituent parts.

### BACKGROUND OF THE INVENTION

Most plant biomass materials, such as wood, are referred to as lignocellulosic material and comprise three main components, namely, cellulose, hemi -cellulose and lignin.

| | |
|---|---|
| Cellulose: | is a polysaccharide consisting of a linear chain of β(1→4) linked D-glucose units and will usually comprise 7,000 to 15,000 glucose molecules. |
| Hemi cellulose: | is a polysaccharide related to cellulose but is derived from several sugars including glucose, xylose, mannose, galactose, rhamnose, and arabinose and consists of shorter chains of around 200 sugar units. |
| Lignin is: | a cross-linked macromolecule with molecular masses in excess of 10,000 and is relatively hydrophobic and aromatic in nature. Lignin is rich in the phenylpropanoids, such as *p*-coumaryl alcohol, coniferyl alcohol, and sinapyl alcohol. |

Lignin is considered a desirable source of base chemicals as a substitute for petrochemicals. Of course it is desirable that any process for the separation of lignin from biomass material has the minimal environment impact and therefore uses "green" technology and is low in energy consumption and waste products.

Various processes have been investigated, for example, various types of inorganic chemicals in water have been used to modify lignin to render it water soluble. However, such processes present problems in recovering or destroying the inorganic chemicals.

Other known processes use organic solvents for dissolving the lignin from the lignocellulosic material. These processes can be expensive and the recovery or disposal of the organic solvents makes the processes undesirable.

Other processes use combinations of acids and alcohols in an aqueous environment. However, the presence of excess water can be detrimental to the process, and use of high concentrations of acid requires costly recovery systems.

There have been various attempts to provide suitable processes for the separation of lignin from lignocellulosic materials.

Numerous historical processes have been described, for example, in the 1930s which comprises treating lignocellulosic material with a variety of aqueous organic solvents. However, such methods have generally proved to be inefficient and/or inadequate because of the difficulties faced in separating solvents such as ethanol from water.

More recently, U.S. Patent No. 3,932,207 describes a process in which, prior to cooking, fragments of raw lignocellulosic material are impregnated with a solution of a lignin-solubilising reactant in an organic solvent with a boiling point higher than the cooking temperature. Then the impregnated material is immersed in a liquid which is immiscible with the solvent of the solution.

U.S. Patent No. 4,520,105 describes a process involving a chemical pre-treatment with a mixture of water and lower alcohols or acetone, after which the residue is separated and then treated with a similar solvent mixture at elevated temperature. However, aqueous alcohol or aqueous acetone mixtures cannot easily be separated into two phases. Also, separation of the lignin from dissolved sugars would require further processing through, for example, extensive washing.

U.S. Patent No. 4,594,130 describes a cooking process, in the absence of oxygen, at elevated temperatures with a neutral or acidic mixture of alcohol and water containing a magnesium, calcium or barium salt as a catalyst. The catalyst is for the purpose of aiding retention of the hemicellulose in the cellulosic cake.

European Patent Application 86305606.5 describes a process for digesting lignocellulosic material with an ester, an organic lignin solvent and water. The lignin solvent is either an organic acid or alcohol or mixtures thereof, and it is miscible in both the ester and the water. Cooling of the liquor apparently results in some phase separation, but a centrifuge is also required.

Most recently, US Patent No. 5,730,837 describes the use of sulphuric acid in a 24% water, 44% methyl isobutyl ketone and 32% ethanol in the separation of biomass at 140°C and resulting in an 18% yield of lignin based on the wood charged.

### SUMMARY OF THE INVENTION

We have found that the use of sonication provides a clean and energy efficient and low temperature process for the separation of biomass material into its components cellulose, hemicellulose and lignin.

Generally, in the process we have developed, lignin present in the biomass, e.g. wood, is extracted into the aqueous phase, the hemicellulosic material and dissolved sugars remain in the organic phase and the cellulose remains as pulp in the solid remains from the biomass, e.g. wood.

Thus, according to a first aspect of the invention we provide a method of processing biomass which comprises the pre-treatment of biomass material in an aqueous solvent system, wherein a slurry of biomass, water, a water miscible solvent and a water immiscible solvent; and including an organic acid; are digested and subjected to ultrasonic waves; and separating the biomass into its constituents of lignin, hemicellulose and cellulose.

According to one aspect of the present invention a mixture of biomass, e.g. wood; water, a water miscible solvent and a water immiscible solvent at varying acidities are digested and separately, simultaneously or sequentially subjected to sonication, e.g. ultrasound, in order to break the biomass into cellulose, hemicellulose and lignin.

Optionally, after the digestion, further water may be added to aid the separation in the organic and aqueous phases.

The use of ultrasonication is especially advantageous in, *inter alia,* the hydrolysis of the hemicelluloses present in the biomass. Thus, the lignin present in the biomass is generally extracted into the organic phase, the hemicellulosic material and dissolved sugars is extracted into the aqueous phase and the cellulose remains in the biomass residue.

The method of the invention comprises digestion of a lignocellulosic material in an acidic aqueous medium. Although a variety of acids may be used, in one aspect of the invention it is desirable that the acid is of as high a pH as possible. It will be understood by the person skilled in the art that conventionally known acids, for example, a mineral acid, such as sulphuric acid, phosphoric acid or nitric acid, may be used. In this aspect of the invention sulphuric acid may be preferred.

Alternatively, in another aspect of the invention a preferred acid may be an organic acid, such as an aliphatic carboxylic acid, an aliphatic dicarboxylic acid an aminocarboxylic acid or an aminodicarboxylic acid. When an organic acid is used in the process of the invention it may generally have a pKa of less than 5, e.g. from 2 to 5. In the case of a dicarboxylic acid, and especially a dicarboxylic amino acid where the carboxylic acid moieties within the molecule may have different pKa values, at least one of the carboxylic acid moieties should desirably have a pKa of less than 5. Thus, for example, an aliphatic carboxylic acid or an aliphatic dicarboxylic acid may contain 1 to 6 carbon atoms in the molecule, preferably 1 to 4 carbon atoms.

Examples of organic carboxylic acids include, but shall not be limited to, acetic acid and formic acid. Such acids are recognised as being weak acids. Alternatively, the acid may be a dicarboxylic acid. In a further alternative the carboxylic acid may be a Zwitter ionic acid, such as an aminocarboxylic acid, for example, glutamic acid. It will be understood by the person skilled in the art that that the concentration of the acid may vary and that mixtures of the aforementioned acids may be used.

As hereinbefore described the use of ultrasonication is beneficial in the hydrolysis of the hemicelluloses present in the biomass. Thus, ultrasonication may be used as a pre-treatment prior to applying other processes to the biomass material as described herein. However, we have surprisingly found that ultrasonication is beneficial in the hydrolysis of the hemicelluloses to monosaccharide, the aldopentoses, such as, ribose, arabinose, xylose and lyxose. It will be well understood by the person skilled in the art that such monosaccharides are beneficial in their own right or in the generation of fermentation products, etc. Thus, according to a further aspect of the invention we provide a method of hydrolysis of hemicelluloses which comprises the digestion of a hemicellulose material in an aqueous solvent system subjected to ultrasonic waves, e.g. ultrasound, and separating the desired hydrolysis products, e.g. monosaccharides as hereinbefore described. It will be understood that the hemicellulose material may be a mixture of hemicelluloses materials and may comprise the hemicellulose separated from a bulk biomass material or may comprise the biomass material itself.

As hereinbefore described, an essential element of the present invention is the use of sonication as an energy source, e.g. the use of ultrasound. Although ultrasound as a power source may be in the range of from 2 to 10 MHz, for the purposes of the present invention the ultrasound used will generally have a frequency in the range of from 10 to 250 kHz, alternatively, from 20 to 100 kHz.

The process liquor or slurry is subject to the operating vicinity of the ultrasonic probe if used, or of an ultrasonic energy transducer, such as a wrap-around ultrasonic energy transducer assembly, if such a configuration is employed. A suitable example of such a device, known in industry and commercially as the Prosonitron™, is documented in WO 00/35579. The ultrasonic energy may be applied continuously or in a discontinuous manner, such as by pulsed application. Any suitable source of ultrasonic irradiation may be used. An ultrasonic probe may, for example, be inserted into a mixing vessel, such as a continuous ultrasonic flow cell, an ultrasonic emitter may be contained in the mixing vessel, or the mixing vessel may be housed in an ultrasonic bath or it may have an ultrasound transducer fixed to the external walls of the mixing vessel. The amplitude and frequency of the ultrasound waves affects the rate of nucleation and crystal growth. The frequency of the ultrasound waves may for example be from 16 kHz to 1 MHz, preferably from 10-500 kHz, more preferably from 10 - 100 kHz such as at 10, at 20, 40, 60, 80, or 100 kHz or at any frequency therebetween, such as, 30 kHz or 50 kHz.

The ultrasonic irradiation is employed at an amplitude or power density that is appropriate for the production of material for a pre-determined application. For laboratory probe systems with an emitting face of, for example 80 cm², the amplitude selected may be from about 1 - 30 µm, typically from 3 - 20 µm, preferably from 5 - 10 µm, for example, 6µm. Probes having a probe face surface area of 8 cm² and a power requirement of from 5-80 W, provide a power density of from about 0.6 - 12.5 W/cm² using amplitude of 2-15 µm. In larger systems, preferably such as those embodied in WO 03/101577, comprising transducers bonded onto the flow cell, for example a 6 litre flow cell, the power density for the transducers employed may be from 10 - 100 W/L, preferably from 30-80 W/L, and more preferably from 50-75 W/L, for example 60 W/L or 70 W/L. The present invention is particularly suitable for industrial scale production.

The residence time of the mixed components in the ultrasonic flow cell may be preferably greater than 0.1 ms, more preferably greater than 1 ms, more preferably greater than 1 minute, for example between 1 second and 24 hours, more preferably between 1 minute and 6 hours, more preferably between 5 minutes and 1 hour.

The ultrasound source may vary depending, *inter alia,* upon the nature of the biomass, but we have found that an ultrasound source with an energy output of from 50 to 400 W is desirable, e.g. 100 to 300 W or 150 to 250 W, e.g. 200 W.

The mechanism by which ultrasound improves the separation of lignin from lignocellulosic material is not well understood, but it may be due to ultrasound's ability to cause cavitation which causes local extremes of temperature and pressure in the liquid where the reaction happens and/or it breaks up solids and removes passivating layers of inert material to give a larger surface area for the reaction to occur over. Sonication reduces the amount of insoluble pulp and increases the yield of organic soluble lignin.

In a further aspect of the invention the process may be improved, by, for example dewaxing the lignocellulose material prior to reaction. Although any conventionally known dewaxing agents may be used, dewaxing may be microbiological, e.g. use of fungal organisms, or chemical, e.g. use of one or more organic solvents. Although it will be understood that conventionally known dewaxing solvents may be used, such as toluene, it is within the scope of the present invention to use more environmentally friendly solvents where available.

Furthermore, the digestion process can be made more efficient through preliminary treatment of lignin by fungi. This enables a decrease in the degree of lignin polymerisation and, therefore, facilitates the slowest step of the digestion reaction. The pre-treatment of the biomass material prior to further processing may also be advantageous in that, *inter alia,* the purity of resulting products may be improved. Also, since any biomass will contain not only lignin, cellulose and hemicellulose, but also proteins, waxes, essential oils, inorganic compounds, etc. and the influence of any by-products, e.g. on further processes, may be reduced.

In addition, the rate of reaction may be faster in a flow regime compared to, for example, a stirred tank.

The process of the reaction may include an additional energy source, i.e. in addition to sonication. A variety of additional energy sources may be utilised, such as thermal energy. However, it is a particular advantage of the present invention that the separation process may be carried out at low temperature, that is, low temperature compared to prior art process. Thus, for example, the prior art process described in US Patent No. 5,730,837 is conducted at a temperature of 140°C
140°C and up to as high as 220°C, whereas, by contrast, the process of the present invention may be conducted at a temperature of about 40°C, for example from 30 to 60°C. Therefore, according to the present invention an additional energy source which may be utilised may be microwave energy. Although it is known to use microwave energy in the treatment of biomass materials, the use of microwave in association with sonication is novel *per se* and is considered within the scope of the present invention.

The process of the present invention may be desirably carried out at atmospheric pressure, however, it is within the scope of the present invention for the reaction to be carried out at elevated pressure.

Although a variety of water-immiscible organic solvents may be utilised in the present invention, it is desirable to use a ketone, such as an aliphatic ketone. Preferably the ketone is an aliphatic ketone having at least 4 carbon atoms (and may have as many as 10 carbon atoms). Aliphatic ketones which may be mentioned include, for example, methyl ethyl ketone, methyl isopropyl ketone, methyl propyl ketone, methyl butyl ketone, methyl isobutyl ketone, methyl isoamylketone, diethyl ketone, ethyl isopropyl ketone, ethyl propyl ketone, and ethyl isobutyl ketone. A particular ketone which may be mentioned is methyl isobutyl ketone (MIBK). Typically the ketone is present in the solvent system in an amount of from about 5 to 65% w/w. The weight ratio of ketone to water is preferably in the range of about 1:9 to 5:1, so long as a single phase of digesting liquid is obtained.

The water miscible or water soluble solvent may preferentially be an alcohol. The alcohol may have less than about 4 carbon atoms to assure that it will be water-miscible. Useful alcohols which may be mentioned include, for example, methanol, ethanol, propanol, isopropanol and butanol. The alcohol is typically present in an amount of from about 25 to 35% w/w.

Typically, the weight ratio of solvent(s) to biomass may vary depending upon, *inter alia,* the nature of the biomass, the nature of the solvent, etc. However, the ratio may be from 4:1 to 10:1.

After the separation is complete, the phase may be easily separated by the addition of either water or water-immiscible solvent. The lignin present in the water-immiscible solvent may be isolated by conventional techniques, such as, for example, evaporation of the usually volatile, water-immiscible solvent. The hemicellulose and dissolved sugars will generally be in the aqueous or water miscible phase and cellulosic material remaining in an insoluble cake.

The process described herein is advantageous in that, *inter alia,* a large proportion of the materials employed in the method described herein is recyclable, for example, there may be as much as 95% recovery of the materials e.g. solvents, acid, etc used in the method of the invention.

Thus, according to a further aspect of the invention we provide lignin, hemicellulose and/or cellulose prepared by the process as hereinbefore described. In one aspect of the invention we provide lignin prepared by the process as hereinbefore described. In another aspect of the invention we provide hemicellulose prepared by the process as hereinbefore described. In another aspect of the invention we provide cellulose prepared by the process as hereinbefore described.

We especially provide a process for the preparation of fine chemicals from lignin prepared according to the process as hereinbefore described.

In addition to the invention as hereinbefore described, the acid hydrolysis process may be replaced or supported by hydrolysis using one or more heterogeneous catalysts, such as xeolite, palladium, and the like.

In addition or in the alternative the solvent separation process as hereinbefore described may comprise the use of one or more solvent compatible membranes, for example a nanomembrane, which aid the separation of for example, water miscible and water immiscible components. The use of membrane separation may be desirable in that, *inter alia,* it would minimise or remove the need for the use of certain solvents and especially organic solvents which may be environmentally undesirable.

The process as hereinbefore described may comprise a continuous process or a batch process. For use on a large plant scale a continuous process is preferred. However, in one aspect of the present invention it is envisaged that biomass may be treated at or close to source, in which case a batch process may be desirable. Indeed, it is a particular aspect of the present invention that we provide a process which is low temperature, low energy and environmentally friendly which may be utilised on a small scale locally to where the biomass is sourced.

In a further aspect of the invention we provide a method or process as hereinbefore described wherein the ultrasound is provided to the process liquor or slurry in a vessel using a multiplicity of ultrasonic transducers attached to a wall of the vessel in an array extending both circumferentially and longitudinally, each transducer being connected to a signal generator so that the transducer radiates no more than 3 W/cm², the transducers being sufficiently close together and the number of transducers being sufficiently high that the power dissipation within the vessel is between 25 and 150 W/litre.

Thus, according to a further aspect of the invention we provide a system for the processing of biomass which comprises the digestion of biomass material in an aqueous solvent system subjected to ultrasonic waves and separating the biomass into its constituents of lignin, hemicellulose and cellulose.

We further provide a reactor, e.g. a mobile reactor, for the processing of biomass which comprises the digestion of biomass material in an aqueous solvent system subjected to ultrasonic waves and separating the biomass into its constituents, lignin, hemicellulose and cellulose. It will be understood by the person skilled in the art that an assembly for the processing of biomass may comprise a plurality of reactors arranged to enable the performance of a "biorefinery process".

The reactor as hereinbefore described may comprises a reaction vessel, an ultrasound source and a phase separation system. In addition, the reactor as hereinbefore described may optionally comprise one or more of a microwave source, a solvent recycling or regeneration system, a membrane separation system, etc.

The invention will now be described by way of example only and with reference to the accompanying tables.

### Example 1

### Reproduction of the Prior Art of US 5,730,837

Exact compositions used in the reproduced examples of this study are:
15 g of dry biomass (dried in vacuum oven to ensure known amount of water in the liquor, and chipped by planer into 1-3 mm chips), 150 ml of liquor (24% water, 44% methylisobutylketone MIBK, 32 % ethanol), 0.05 mol L-1 sulphuric acid H₂SO₄.

Experiments were performed in a stainless steel autoclave with 250 ml internal volume, equipped with magnetic drive stirrer and electric heater.

### Example 2

### Effect of ultrasound on acid digestion of wood biomass

Ultrasound is known to be effective in cell wall disruption, thus facilitating the processes of extraction. In these experiments we used a laboratory scale horn-type sonicator with controlled temperature and power output -83 W. Oak biomass was used and conditions of separation are the same as standard conditions. Pre-treatment of biomass was done in the reaction liquor at 40-50°C.

Table 1 shows that increasing sonication time results in the decreased amount of residual insoluble pulp and an increased amount of organic soluble lignin. The amount of water-soluble hemicelluloses remains unaffected. The total decrease in the amount of pulp between 15 and 60 min sonication is ca. 5.2 % of the total dry weight of the biomass sample, whereas the increase in the soluble lignin amount is about 4.8 %.

The main effect of sonication appears to be to make the process of conversion of lignin polymer into organic-soluble lignin more effective and/or in making lignin more accessible to organic solvent.

**Table 1. The effect of sonication time on the separation process**

| **Ultrasonic Time (min)** | **Pulp (%)** | **Lignin (%)** | **Hemicelluloses (%)** |
|---|---|---|---|
| 15 | 37.4 | 13.0 | 49.6 |
| 30 | 34.3 | 16.8 | 48.9 |
| 60 | 32.0 | 17.8 | 50.2 |

### Example 3

### Comparative Studies Against US 5,730,837

Comparative studies were made comparing the low temperature (40°C) sonicated process of the present invention (referred to as BioEx) for different biomass sources.

In addition a comparison of the low temperature sonicated process against the high temperature unsonicated reaction of the prior art process described in US 5,730,837.

The results are shown in Table 2.

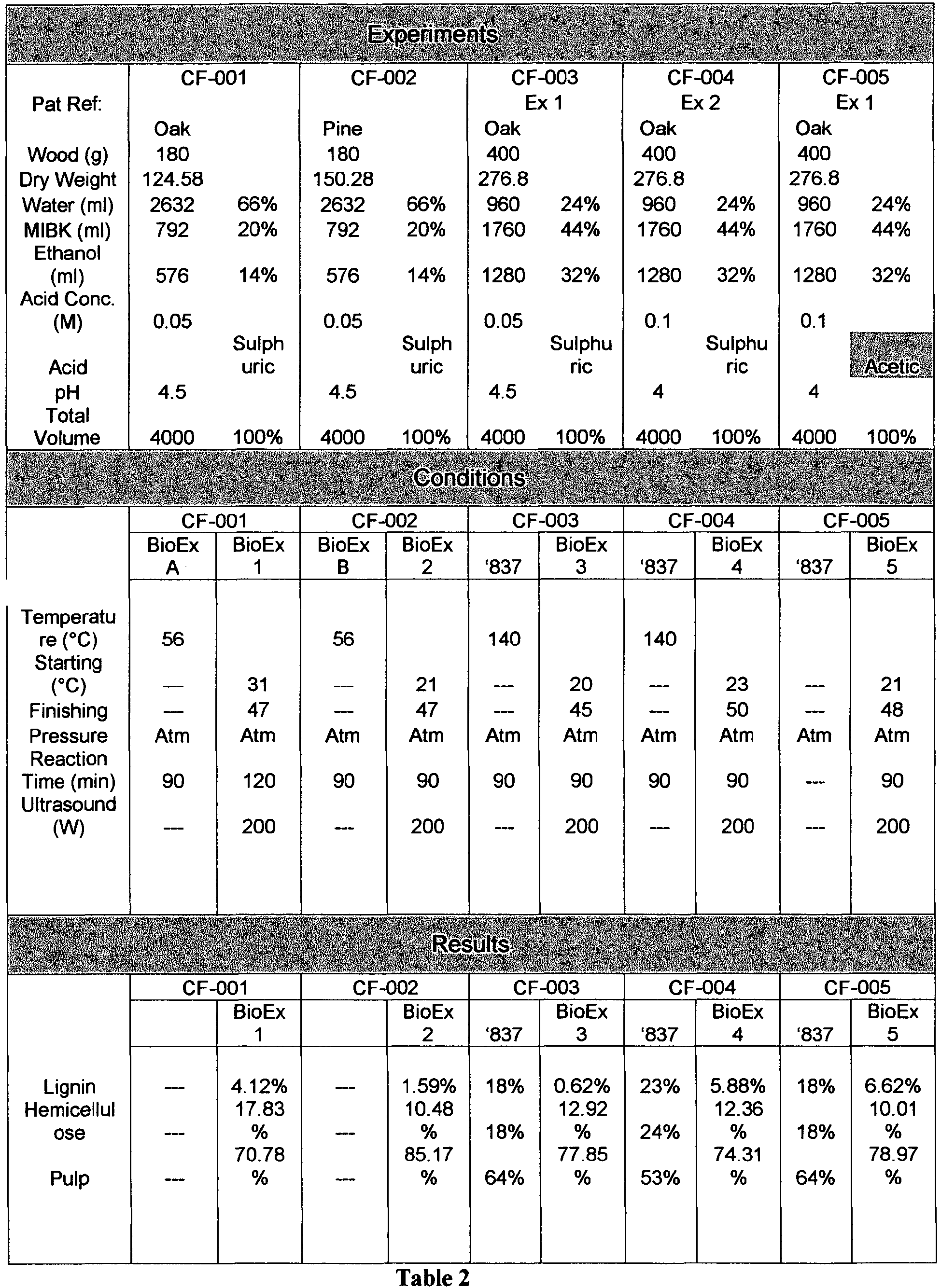

### Closed Loop Process Apparatus

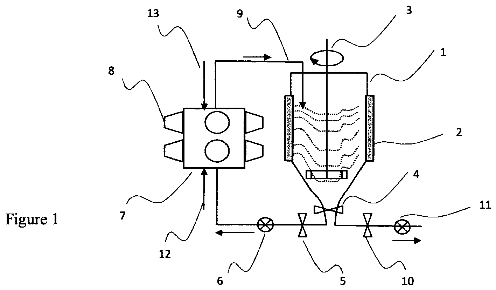

Figure 1 schematically represents, closed loop process apparatus comprises an ancillary process vessel 1 fitted with optional thermoregulation cooling jacket 2, impeller 3 and bottom run-off 4 through which process liquid / slurry is pumped at a first flow rate via valve 5 and pump 6 into an ultrasonic flow cell chamber 7 fitted with wrap-around ultrasonic transducers 8 located on the external surface of it. The ultrasonic device 7 irradiates the mixture with ultrasonic energy and the mixture flows through an outlet 9 and into the jacketed vessel 1, completing a continuous closed flow loop. The flow cycle is repeated until the desired product mixture is attained. Thus in use of the apparatus the process mixture is thoroughly and rapidly mixed; the volume of the vessel 1 and the flow rates being such that the residence time in the ultrasonic flow cell chamber 7 is for example, 10s or 60s or 100s. The skilled addressee will appreciate that the closed loop process apparatus of Figure 7 may be configured so that, for example, the process slurry may be removed from the apparatus via valve 10 and pump 1, and for example by introducing additional delivery means 12, 13 for further process liquor or slurry.

## Claims

1. A method of processing biomass which comprises the pre-treatment of biomass material in an aqueous solvent system, wherein a slurry of biomass, water, a water miscible solvent and a water immiscible solvent; and including an organic acid; are digested and subjected to ultrasonic waves; and separating the biomass into its constituents of lignin, hemicellulose and cellulose.

2. A method according to claim 1 wherein the lignin present in the biomass is extracted into the organic phase, the hemicellulosic material and dissolved sugars is extracted into the aqueous phase and the cellulose remains as a solid residue.

3. A method according to claim 1 wherein the ultrasound used has a frequency in the range of from 10 to 250 kHz.

4. A method according to claim 1 wherein the method is conducted at a temperature of from 30 to 60°C.

5. A method according to claim 1 wherein the water-immiscible organic solvent is a ketone.

6. A method according to claim 1 wherein the water-miscible solvent is an alcohol.

7. A method of preparing lignin, hemicellulose and/or cellulose which comprises the digestion of biomass material in an aqueous solvent system comprising water, a water miscible solvent and a water immiscible solvent; and including an organic acid; subjecting it to ultrasonic waves and separating the biomass into its constituents of lignin, hemicellulose and cellulose.

8. A method as claimed in any preceding claim, wherein the ultrasound is provided to the process liquor or slurry in a vessel using a multiplicity of ultrasonic transducers attached to a wall of the vessel in an array extending both circumferentially and longitudinally, each transducer being connected to a signal generator so that the transducer radiates no more than 3 W/cm², the transducers being sufficiently close together and the number of transducers being sufficiently high that the power dissipation within the vessel is between 25 and 150 W/litre.

9. A method of hydrolysis of a hemicellulose which comprises the digestion of a hemicellulose material in an aqueous solvent system, wherein a slurry of biomass, water, a water miscible solvent and a water immiscible solvent; and including an organic acid; are digested and subjected to ultrasonic waves; and separating the resulting hydrolysis products.

## Patentansprüche

1. Verfahren zur Verarbeitung von Biomasse, die das Vorbehandeln von Biomassenmaterial in einem wässrigen Lösungsmittelsystem umfasst, wobei eine Aufschlämmung von Biomasse, Wasser, ein mit Wasser mischbares Lösungsmittel und ein mit Wasser nicht mischbares Lösungsmittel; und einschließlich eine organische Säure; aufgeschlossen und Ultraschallwellen ausgesetzt werden; und die Biomasse in ihre Bestandteile von Lignin, Hemicellulose und Cellulose getrennt werden.

2. Verfahren nach Anspruch 1, wobei das Lignin, das in der Biomasse vorhanden ist, in die organischen Phase extrahiert wird, wobei das Hemicellulosematerial und gelöster Zucker in die wässrige Phase extrahiert wird und die Cellulose als ein fester Rückstand bleibt.

3. Verfahren nach Anspruch 1, wobei der verwendete Ultraschall eine Frequenz im Bereich von 10 bis 250 kHz aufweist.

4. Verfahren nach Anspruch 1, wobei das Verfahren bei einer Temperatur von 30 bis 60 °C durchgeführt wird.

5. Verfahren nach Anspruch 1, wobei das mit Wasser nicht mischbare organische Lösungsmittel ein Keton ist.

6. Verfahren nach Anspruch 1, wobei das mit Wasser mischbare Lösungsmittel ein Alkohol ist.

7. Verfahren zur Herstellung von Lignin, Hemicellulose und/oder Cellulose, die das Aufschließen des Biomassenmaterials in einem wässrigen Lösungsmittelsystem umfasst, das Wasser, ein mit Wasser mischbares Lösungsmittel und ein mit Wasser nicht mischbares Lösungsmittel; und einschließlich eine organische Säure umfasst; es Ultraschallwellen ausgesetzt wird und die Biomasse in ihre Bestandteile von Lignin, Hemicellulose und Cellulose getrennt werden.

8. Verfahren nach einem der vorhergehenden Ansprüche, wobei der Ultraschall zu dem Flüssigkeits- und Aufschlämmungsprozess in einem Behälter bereitgestellt wird, unter Verwendung einer Vielzahl von Ultraschallwandlern, die an einer Wand des Behälters in einer Anordnung befestigt sind, die sich sowohl in Umfangsrichtung als auch in Längsrichtung erstreckt, wobei jeder Wandler mit einem Signalgeber verbunden ist, sodass der Wandler nicht mehr als 3 W/cm² ausstrahlt, wobei die Wandler ausreichend dicht beieinander liegen und die Anzahl der Wandler ausreichend groß ist, das der Leistungsverlust innerhalb des Behälters zwischen 25 und 150 W/Liter liegt.

9. Verfahren zur Hydrolyse einer Hemicellulose, die das Aufschließen eines Hemicellulosematerials in einem wässrigen Lösungsmittelsystem umfasst, wobei eine Aufschlämmung von Biomasse, Wasser, ein mit Wasser mischbares Lösungsmittel und ein mit Wasser nicht mischbares Lösungsmittel; und einschließlich eine organische Säure; aufgeschlossen und Ultraschallwellen ausgesetzt wird; und die resultierenden Hydrolyseprodukte getrennt werden.

## Revendications

1. Procédé de traitement de biomasse comprenant le prétraitement d'une biomasse dans un système solvant aqueux, dans lequel une boue de biomasse, de l'eau, un solvant miscible à l'eau et un solvant non miscible à l'eau ; et comprenant un acide organique ; sont digérés et exposés à des ultrasons ; et la biomasse étant séparée en ses parties constituantes à savoir lignine, hémicellulose et cellulose.

2. Procédé selon la revendication 1 dans lequel la lignine présente dans la biomasse est extraite dans la phase organique, la matière hémicellulosique et les sucres dissouts sont extraits dans la phase aqueuse et la cellulose reste un résidu solide.

3. Procédé selon la revendication 1 dans lequel l'ultrason utilisé a une fréquence dans la plage de 10 à 250 kHz.

4. Procédé selon la revendication 1, ledit procédé étant effectué à une température de 30 à 60 °C.

5. Procédé selon la revendication 1 dans lequel le solvant organique non miscible à l'eau est une cétone.

6. Procédé selon la revendication 1 dans lequel le solvant miscible à l'eau est un alcool.

7. Procédé de préparation de lignine, hémicellulose et/ou cellulose comprenant la digestion d'une biomasse dans un système solvant aqueux, comprenant de l'eau, un solvant miscible à l'eau et un solvant non miscible à l'eau ; et comprenant un acide organique ; étant exposé à des ultrasons et la biomasse étant séparée en ses parties constituantes à savoir lignine, hémicellulose et cellulose.

8. Procédé selon l'une quelconque des revendications précédentes, dans lequel l'ultrason est fourni à la liqueur ou la boue de procédé dans un récipient utilisant une multiplicité de transducteurs ultrasoniques fixés à une paroi du récipient sous forme d'un ensemble s'étendant circonférentiellement et longitudinalement, chaque transducteur étant connecté à un générateur de signal de sorte que le transducteur ne rayonne pas sur plus de 3 W/cm², les transducteurs étant suffisamment proches les uns des autres et le nombre de transducteurs étant suffisamment élevé pour que la puissance dissipée dans le récipient soit comprise entre 25 et 150 W/litre.

9. Procédé d'hydrolyse d'une hémicellulose comprenant la digestion d'une matière hémicellulosique dans un système solvant aqueux, dans lequel une boue de biomasse, de l'eau, un solvant miscible à l'eau et un solvant non miscible à l'eau ; et comprenant un acide organique ; sont digérés et exposés à des ultrasons ; et les produits de l'hydrolyse qui en résultent étant séparés.
